# EUROPÄISCHE PATENTANMELDUNG

(11) **EP 1 847 350 A1**
(43) Veröffentlichungstag der Anmeldung: **24.10.2007**
(21) Anmeldenummer: 07006637.8
(22) Anmeldetag: 30.03.2007
(51) Int. Cl.: B23K 37/04

(54) **Schneidtisch für eine Schneidanlage**

(30) Priorität: 18.04.2006 DE 202006006174 U
(71) Anmelder: Faber, Stefan, 61169 Friedberg (DE)
(72) Erfinder: Faber, Stefan, 61169 Friedberg (DE)
(74) Vertreter: Körner, Volkmar Horst

(57) **Zusammenfassung**

Ein Schneidtisch (1) für eine Schneidanlage hat auf einem endlos umlaufenden Förderband (7) angeordnete Auflageelemente (8). Diese Auflageelemente (8) stützen das zu schneidende Werkstück (5) ab und transportieren es unter ein Schneidportal (2) der Schneidanlage. Dies ermöglicht eine einfache Be- und Entladung des Schneidtisches (1).

## Beschreibung

Die Erfindung betrifft einen Schneidtisch für eine ein Schneidportal aufweisende, insbesondere zum Plasma-, Laser- oder Autogenschneiden ausgebildete Schneidanlage, mit einer mehrere Auflageelemente aufweisenden Auflage für zumindest ein Werkstück.

Schneidtische für Schneidanlagen weisen in der Regel einen Rost auf, auf dem die Auflageelemente befestigt sind und sind aus der Praxis bekannt. Das Schneidportal der Schneidanlage lässt sich über den Rost verfahren und damit das auf dem Rost befindliche Werkstück schneiden. Zur Beladung des Schneidtisches wird das Schneidportal von dem Rost weg gefahren und das Werkstück auf die Auflageelemente gelegt. Anschließend wird das Schneidportal wieder über den Schneidtisch gefahren und das Werkstück kann geschnitten werden. Die ausgeschnittenen Bauteile bleiben auf dem Rost liegen oder fallen durch den Rost.

Nachteilig bei dem bekannten Schneidtisch ist, dass sich das Be- und Entladen des Schneidtisches sehr aufwändig gestaltet, da das Beladen nur mit dem Kran und entsprechenden Anschlagmitteln erfolgen kann sowie das Entladen meist manuell mit Betreten der Auflagefläche und Aufnehmen der Teile an der Schneidposition erfolgt. Um kürzere Stillstandzeiten des Schneidportals für das Be- und Entladen zu erreichen, verwendet man häufig Wechselauflageroste. Dies erfordert jedoch einen doppelt so hohen Platzbedarf, da eine weitere komplette Auflagefläche außerhalb des Schneidportals be- und entladen wird.

Der Erfindung liegt das Problem zugrunde, einen Schneidtisch der eingangs genannten Art so weiterzubilden, dass er besonders einfach be- und entladen werden kann und einen besonders geringen Platzbedarf aufweist.

Dieses Problem wird erfindungsgemäß dadurch gelöst, dass die Auflageelemente auf einem endlos umlaufenden Förderband zum Transport des zu schneidenden Werkstücks unter das Schneidportal angeordnet sind und dass an der Auflage eine Absaugeinrichtung für entstehende Dämpfe angeordnet ist.

Durch diese Gestaltung lässt sich zur Beladung das Werkstück auf den Auflageelementen des Förderbandes auflegen und durch Antrieb des Förderbandes unter das Schneidportal fahren. Anschließend kann das Werkstück vorzugsweise nach einem Stopp des Förderbandes auf dem Förderband geschnitten werden. Das fertig geschnittene Werkstück wird durch Antrieb des Förderbandes anschließend bis zum Ende des Förderbandes transportiert und kann einfach entnommen werden. Der Schneidtisch lässt sich hierdurch besonders einfach und sicher be- und entladen, da dies immer vom gleichen Platz an den Stirnseiten des Tisches erfolgt, ohne diesen betreten zu müssen. Durch diese Arbeitsweise kann auch in kleinen Hallen ohne Portalkran mit kurzen Rüstzeiten gearbeitet werden. Selbst Kleinteile werden durch das Förderband bis an den Umlenkpunkt transportiert. Ein weiterer Vorteil dieser Gestaltung besteht darin, dass der erfindungsgemäße Schneidtisch einfach bei vorhandenen Schneidanlagen nachgerüstet werden kann.

Die Absaugeinrichtung ermöglicht gemäß einer vorteilhaften Weiterbildung der Erfindung das Absaugen von beim Schneiden entstehendem Staub und Dämpfen zuverlässig aus dem Blickfeld des Brennbereichs, wenn die Absaugeinrichtung einen unterhalb der Auflageelemente angeordneten und in Richtung der Auflageelemente offenen Absaugkanal hat und wenn das Förderband um den Absaugkanal herum geführt ist. Weiterhin werden hierdurch störende Bauteile der Absaugeinrichtung im Blickfeld auf den Brennbereich vermieden.

Die Absaugeinrichtung gestaltet sich gemäß einer anderen vorteilhaften Weiterbildung der Erfindung besonders kompakt, wenn sich der Absaugkanal quer zur Bewegungsrichtung des Förderbandes erstreckt.

Zur Erhöhung der Absaugleistung der Absaugeinrichtung trägt es gemäß einer anderen vorteilhaften Weiterbildung der Erfindung bei, wenn an beiden Enden des Absaugkanals ein Anschluss für ein Absauggebläse angeordnet ist.

Zur weiteren Erhöhung der Absaugleistung der Absaugeinrichtung trägt es gemäß einer anderen vorteilhaften Weiterbildung der Erfindung bei, wenn mehrere Absaugkanäle parallel zueinander angeordnet sind und mit ihren Enden in gemeinsame, sich parallel zur Bewegungsrichtung des Förderbandes erstreckende Sammelkanäle münden. Zudem ist durch diese Gestaltung die Absaugleistung in jeder Brennposition auf dem erfindungsgemäßen Schneidtisch gleich. Durch diese Gestaltung lässt sich durch die Anzahl der eingesetzten Absaugungskanäle die Länge des erfindungsgemäßen Schneidtisches festlegen. Weiterhin lässt sich hierdurch der erfindungsgemäße Schneidtisch modular vor Ort montieren.

Zur besonders hohen Absaugleistung der Absaugeinrichtung im Brennbereich trägt es gemäß einer anderen vorteilhaften Weiterbildung der Erfindung bei, wenn zwischen den Absaugkanälen und den Sammelkanälen Schließelemente zum wahlweisen Schließen oder Freigeben der Verbindung der einzelnen Absaugkanäle mit den Sammelkanälen angeordnet sind und wenn die Steuerung der Schließelemente mit der Bewegung des Schneidportals koppelbar ist, so dass in jeder Stellung des Schneidportals ausschließlich die unmittelbar unterhalb des Schneidportals befindlichen Absaugkanäle mit den Sammelkanälen verbunden sind. Im einfachsten Fall sind die Schließelemente Klappen, welche einzeln umgelegt werden können.

Der bauliche Aufwand zur Steuerung der Schließelemente lässt sich gemäß einer anderen vorteilhaften Weiterbildung der Erfindung besonders gering halten, wenn die Schließelemente bis in den Bewegungsbereich eines Stellelementes des Schneidportals ragende Steuernocken aufweisen.

Eine Selbstreinigung des erfindungsgemäßen Schneidtisches gestaltet sich besonders einfach, wenn das Förderband ein von den freien Enden der Auflageelemente entferntes Drahtgitter aufweist. Durch diese Gestaltung fallen Schlacke und ausgeschnittene Kleinteile ständig an derselben Stelle, nämlich den Umlenkpunkten des Förderbandes von dem erfindungsgemäßen Schneidtisch herab und können besonders einfach entfernt werden. Im einfachsten Fall ist das Drahtgitter als Drahtfördergurt ausgebildet und haltert unmittelbar die Auflageelemente.

Das Förderband weist gemäß einer anderen vorteilhaften Weiterbildung der Erfindung eine hohe Stabilität auf, wenn das Förderband mehrere, sich über die gesamte Breite des Förderbandes erstreckende Querstege aufweist und wenn die Auflageelemente auf den Querstegen angeordnet sind. Auflageelemente und Querstege können dabei einstückig gefertigt sein.

Das Förderband gestaltet sich gemäß einer anderen vorteilhaften Weiterbildung der Erfindung konstruktiv besonders einfach, wenn das Förderband eine umlaufende, angetriebene Kette aufweist, wenn die Querstege auf der Kette befestigt sind und wenn ein Drahtgitter auf der Höhe der Kette angeordnet ist. Vorzugsweise sind die Kette, die Querstege, die Auflageelemente und das Drahtgitter lösbar miteinander verbunden, so dass sich ein Austausch von verschlissenen Bauteilen besonders einfach gestaltet. Insgesamt kann das Förderband zwei oder mehrere Ketten aufweisen.

Die den erfindungsgemäßen Schneidtisch aufweisende Schneidanlage gestaltet sich besonders kompakt, wenn seitlich neben dem Förderband sich parallel zur Bewegungsrichtung des Förderbandes erstreckende Führungen für das Schneidportal angeordnet sind. Diese Führungen ermöglichen den Einsatz eines das Förderband brückenförmig übergreifenden Schneidportals.

Zur weiteren Verringerung des Platzbedarfs des erfindungsgemäßen Schneidtischs trägt es bei, wenn die Führung oberhalb der Sammelkanäle angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in

Fig. 1 einen Teilschnitt durch eine Schneidanlage mit einem erfindungsgemäßen Schneidtisch,

Fig. 2 eine Schnittdarstellung durch den erfindungsgemäßen Schneidtisch aus Figur 1 entlang der Linie II - II,

Fig. 3 perspektivisch den erfindungsgemäßen Schneidtisch aus Figur 1,

Fig. 4 eine stark vergrößerte Darstellung des Teilbereichs IV des erfindungsgemäßen Schneidtischs aus Figur 3.

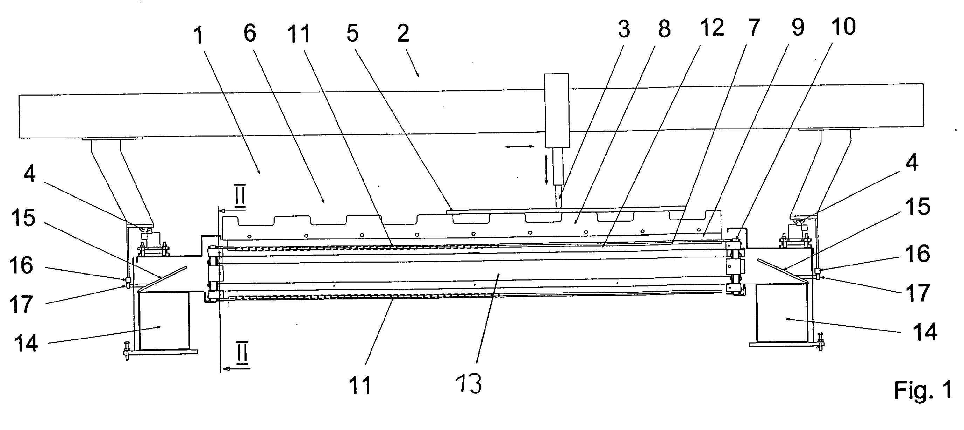

Figur 1 zeigt einen Teilschnitt einer Schneidanlage mit einem Schneidtisch 1 und mit einem über dem Schneidtisch 1 senkrecht zur Zeichenebene verfahrbaren, brückenförmigen Schneidportal 2. Das Scheidportal 2 weist einen Schneidkopf 3 auf, welcher in der Zeichenebene entlang des Schneidportals 3 verfahren werden kann. Die Bewegungen des Schneidkopfes 3 gegenüber dem Schneidportal 2 sind zur Verdeutlichung mit Pfeilen gekennzeichnet. Der Schneidkopf 3 dient zum Plasma-, Laser- oder Autogenschneiden eines auf dem Schneidtisch 1 liegenden Werkstücks 5. Der Schneidtisch 1 weist Führungen 4 für das Schneidportal 2 und eine Auflage 6 für das zu schneidendes Werkstück 5 auf. Die Auflage 6 für das Werkstück 5 hat ein Förderband 7, auf dem eine Vielzahl von einzelnen Auflageelementen 8 angeordnet sind. Die Auflageelemente 8 sind auf sich über den Schneidtisch 1 erstreckenden Querstegen 9 befestigt. Die Querstege 9 werden von einer Kette 10 senkrecht zur Zeichenebene angetrieben. Auf der Höhe der Kette 10 hat das Förderband 7 ein Drahtgitter 11. Unterhalb des Drahtgitters 11 ist eine Absaugeinrichtung 12 zur Absaugung von beim Schneiden des Werkstücks 5 entstehenden Dämpfen und Gasen angeordnet. Die Absaugeinrichtung 12 weist einen quer zur Bewegungsrichtung des Förderbandes 7 angeordneten und zum Drahtgitter 11 hin nach oben offenen Absaugkanal 13 auf. Der Absaugkanal 13 mündet in einen seitlich neben dem Förderband 7 angeordneten Sammelkanal 14. Ein als Klappe ausgebildetes Schließelement 15 ermöglicht das Öffnen und Schließen der Verbindung des Absaugkanals 13 mit dem Sammelkanal 14. Hierzu hat das Schließelement 15 einen bis in den Bewegungsbereich eines Stellelementes 16 des Schneidportals 2 ragenden Steuernocken 17.

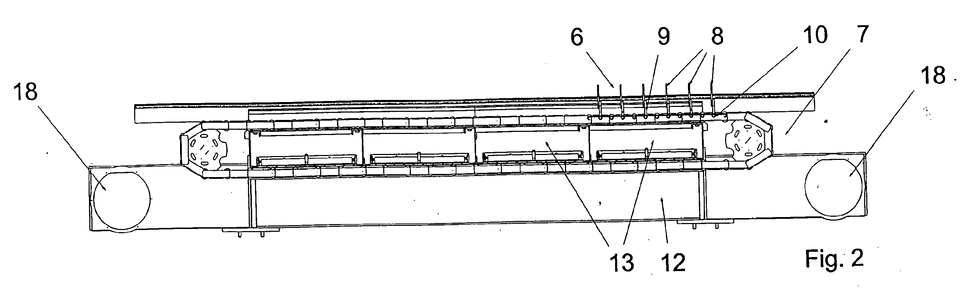

Figur 2 zeigt eine Schnittdarstellung durch den Schneidtisch 1 aus Figur 1 entlang der Linie II - II. Hierbei ist zu erkennen, dass mehrere Absaugkanäle 13 parallel zueinander innerhalb des Förderbandes 7 und unterhalb des Drahtgitters 11 und damit unterhalb der Auflageelemente 8 angeordnet sind.

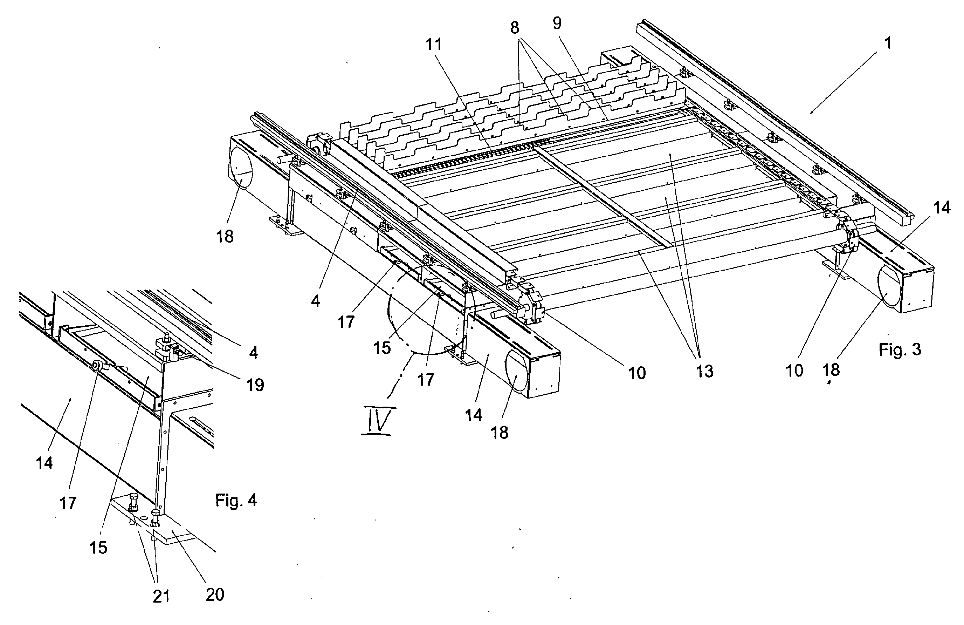

Figur 3 verdeutlicht den Aufbau des Schneidtisches 1 mit der Absaugeinrichtung 12. Zur Verdeutlichung sind von dem Förderband 7 aus Figur 1 und 2 das Drahtgitter 11 und die Auflageelemente 8 nur teilweise dargestellt. Hierbei ist zu erkennen, dass an jedem Ende der Absaugkanäle 13 jeweils ein Sammelkanal 14 angeschlossen ist und dass jeweils Schließelemente 15 zur Absperrung der Absaugkanäle 13 vorhanden sind. Damit wird sichergestellt, dass nur die unterhalb des Schneidportals 2 befindlichen Absaugkanäle 13 mit den Sammelkanälen 14 verbunden sind. Die Sammelkanäle 14 weisen jeweils Anschlüsse 18 für zumindest ein nicht dargestelltes Absauggebläse auf.

Figur 4 zeigt in einer stark vergrößerten Darstellung der Einzelheit IV aus Figur 3, dass die auf dem Schneidtisch 1 angeordneten Führungen 4 für das Schneidportal 2 über eine Feineinstelleinrichtung 19 mit dem Schneidtisch 1 verbunden sind. Füße 20 des Schneidtisches 1 weisen Stellschrauben 21 zur Feineinstellung der Höhe des Schneidtisches 1 auf.

## Patentansprüche

1. Schneidtisch (1) für eine ein Schneidportal (2) aufweisende, insbesondere zum Plasma-, Laser- oder Autogenschneiden ausgebildete Schneidanlage, mit einer mehrere Auflageelemente (8) aufweisenden Auflage für zumindest ein Werkstück, **dadurch gekennzeichnet, dass** die Auflageelemente (8) auf einem endlos umlaufenden Förderband (7) zum Transport des zu schneidenden Werkstücks (5) unter das Schneidportal (2) angeordnet sind und dass an der Auflage (6) eine Absaugeinrichtung (12) für entstehende Dämpfe angeordnet ist.

2. Schneidtisch (1) nach Anspruch 1, **dadurch gekennzeichnet, dass** die Absaugeinrichtung (12) einen unterhalb der Auflageelemente (8) angeordneten und in Richtung der Auflageelemente (8) offenen Absaugkanal (13) hat und dass das Förderband (7) um den Absaugkanal (13) herum geführt ist.

3. Schneidtisch (1) nach Anspruch 1 oder 2, **dadurch gekennzeichnet, dass** sich der Absaugkanal (13) quer zur Bewegungsrichtung des Förderbandes (7) erstreckt.

4. Schneidtisch (1) nach zumindest einem der vorhergehenden Ansprüche, **dadurch gekennzeichnet, dass** an beiden Enden des Absaugkanals (13) ein Anschluss für ein Absauggebläse angeordnet ist.

5. Schneidtisch (1) nach zumindest einem der vorhergehenden Ansprüche, **dadurch gekennzeichnet, dass** mehrere Absaugkanäle (13) parallel zueinander angeordnet sind und mit ihren Enden in gemeinsame, sich parallel zur Bewegungsrichtung des Förderbandes (7) erstreckende Sammelkanäle (14) münden.

6. Schneidtisch (1) nach zumindest einem der vorhergehenden Ansprüche, **dadurch gekennzeichnet, dass** zwischen den Absaugkanälen (13) und den Sammelkanälen (14) Schließelemente (15) zum wahlweisen Schließen oder Freigeben der Verbindung der einzelnen Absaugkanäle (13) mit den Sammelkanälen (14) angeordnet sind und dass die Steuerung der Schließelemente (15) mit der Bewegung des Schneidportals (2) koppelbar ist, so dass in jeder Stellung des Schneidportals (3) ausschließlich die unmittelbar unterhalb des Schneidportals (3) befindlichen Absaugkanäle (13) mit den Sammelkanälen (14) verbunden sind.

7. Schneidtisch (1) nach zumindest einem der vorhergehenden Ansprüche, **dadurch gekennzeichnet, dass** die Schließelemente (15) bis in den Bewegungsbereich eines Stellelementes (16) des Schneidportals (2) ragende Steuernocken (17) aufweisen.

8. Schneidtisch (1) nach zumindest einem der vorhergehenden Ansprüche, **dadurch gekennzeichnet, dass** das Förderband (7) ein von den freien Enden der Auflageelemente (8) entferntes Drahtgitter (11) aufweist.

9. Schneidtisch (1) nach zumindest einem der vorhergehenden Ansprüche, **dadurch gekennzeichnet, dass** das Förderband (7) mehrere, sich über die gesamte Breite des Förderbandes (7) erstreckende Querstege (9) aufweist und dass die Auflageelemente (8) auf den Querstegen (9) angeordnet sind.

10. Schneidtisch (1) nach zumindest einem der vorhergehenden Ansprüche, **dadurch gekennzeichnet, dass** das Förderband (7) eine umlaufende angetriebene Kette (10) aufweist, dass die Querstege (9) auf der Kette (10) befestigt sind und dass das Drahtgitter (11) auf der Höhe der Kette (10) angeordnet ist.

11. Schneidtisch (1) nach zumindest einem der vorhergehenden Ansprüche, **dadurch gekennzeichnet, dass** auf dem Schneidtisch (1) seitlich neben dem Förderband (7) sich parallel zur Bewegungsrichtung des Förderbandes (7) erstreckende Führungen (4) für das Schneidportal (2) angeordnet sind.

12. Schneidtisch (1) nach zumindest einem der vorhergehenden Ansprüche, **dadurch gekennzeichnet, dass** die Führung (4) oberhalb der Sammelkanäle (14) angeordnet ist.
